# DEMANDE DE BREVET EUROPEEN

(11) **EP 1 217 520 A1**
(43) Date de publication de la demande: **26.06.2002**
(21) Numéro de dépôt: 01403299.9
(22) Date de dépôt: 19.12.2001
(51) Int. Cl.: G06F 9/46

(54) **Procédé et système d'exploitation temps réel multitaches**

(30) Priorité: 21.12.2000 FR 0016762
(71) Demandeur: AIRBUS FRANCE, 31060 Toulouse (FR)
(72) Inventeur: Goiffon, Serge, 31300 Toulouse (FR)
(74) Mandataire: Poulin, Gérard

(57) **Abrégé**

L'invention concerne un procédé d'exploitation temps réel multitâches dans lequel on définit un ensemble de fenêtres d'observation de durée fixe paramétrable, comprenant :
- une étape d'attribution d'une durée d'exécution maximale à chaque tâche dans chaque fenêtre d'observation, au cours de laquelle un ordonnanceur garantit un temps minimal d'exécution aux tâches les moins prioritaires,
- une étape de calcul du temps consommé par chaque tâche au cours de chaque fenêtre d'observation,,
- une étape de sanction au cours de laquelle les tâches qui dépassent leur quota, dans une fenêtre d'observation donnée, sont sanctionnées, et ne peuvent reprendre la ressource unité centrale qu'au cours de la fenêtre d'observation suivante.

L'invention concerne également un système d'exploitation temps réel multitâches.

## Description

### Domaine technique

La présente invention concerne un procédé et un système d'exploitation temps réel multitâches, notamment dans un calculateur de type ATSU.

### Etat de la technique antérieure

Un calculateur de type ATSU ("Air Traffic Services Unit") est un calculateur avionique chargé de gérer les nouveaux systèmes de communications sol/bord basés sur l'utilisation de réseaux informatiques à couverture globale. Un tel calculateur a une architecture logicielle caractérisée par la mise en oeuvre d'un système d'exploitation temps réel multitâches POSIX.

Ce calculateur peut intégrer des logiciels de différents niveaux de criticité. Un niveau de priorité élevé est affecté aux tâches les plus critiques afin de satisfaire leurs contraintes temps réel, quel que soit le comportement des tâches moins critiques. Cependant, ces dernières n'ont pas une garantie d'accès minimal à la ressource de calcul, qui peut être monopolisée en partie, ou en totalité, par les tâches plus critiques.

Une des ressources partageable d'un système d'exploitation temps réel POSIX, tel que décrit dans le document référencé [1] en fin de description, est le temps de calcul (temps unité centrale). Le partage est réalisé par un ordonnanceur qui s'appuie sur un critère de priorité et une mesure du temps d'exécution des tâches pour mettre en oeuvre une politique d'ordonnancement.

Dans un tel système d'exploitation temps réel de l'art connu, la durée d'exécution d'une tâche se mesure généralement à l'aide d'impulsions horloge dites "tics", générées par un compteur matériel périodique et comptabilisées par un programme d'interruption dans des compteurs logiciels. Chaque impulsion horloge est attribuée à la tâche qui dispose de la ressource unité centrale au moment de la génération de l'interruption correspondante. Le système tient à jour un compteur global (ou horloge absolue), qui contient le nombre d'impulsions horloge depuis le démarrage du système, et un compteur par tâche (ou horloge relative), qui contient le nombre d'impulsions horloge survenues pendant que cette tâche dispose de la ressource unité centrale.

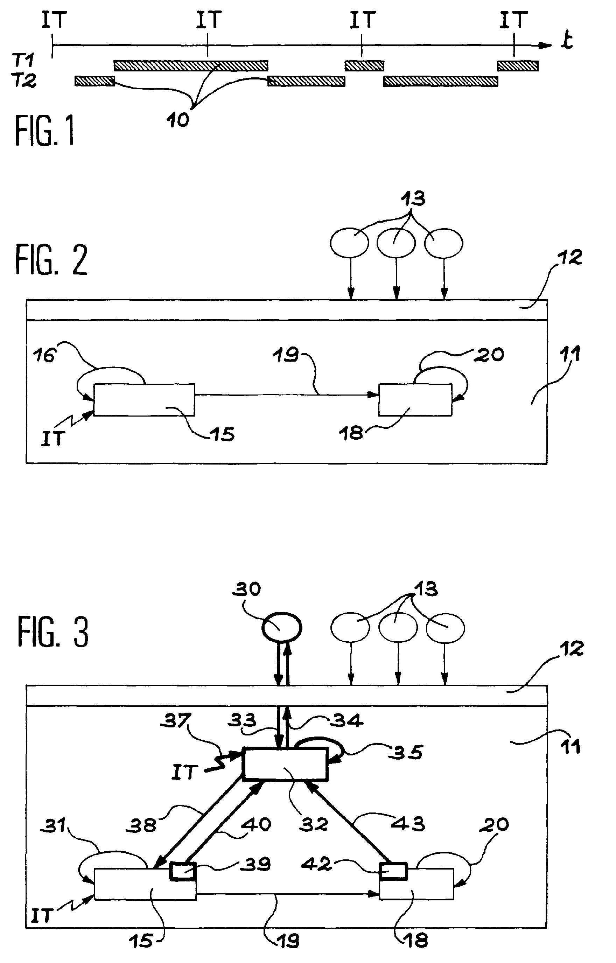

Pour ne pas dégrader les performances d'un tel système, la durée entre deux d'impulsions horloge doit être suffisamment importante pour que leur temps de prise en compte reste négligeable. Cette façon de mesurer le temps conduit à des imprécisions de mesure de la durée des tâches, comme le montre le chronogramme illustré sur la figure 1 avec des interruptions-horloges IT. La mesure de la durée de deux tâches T1 et T2 de même durée 10,5 ms donne, en effet, une valeur mesurée de 30 ms pour la première tâche, et de 0 ms pour la seconde tâche ; les parties grisées 10 représentant l'utilisation de la ressource unité centrale.

Le mode d'ordonnancement choisi dans un calculateur de type ATSU est le mode FIFO ("First in - First out"). Dans ce mode l'ordonnanceur alloue toute la ressource unité centrale, et pour un temps indéterminé, à la tâche prête à s'exécuter et de plus haute priorité. Si plusieurs tâches de même priorité sont prêtes à s'exécuter, elles sont gérées par ordre chronologique et la première de la liste s'exécute jusqu'à ce qu'elle soit bloquée. Dans ce cas, la tâche suivante dans la liste s'exécute. Si une tâche de plus haute priorité devient prête, la tâche en cours d'exécution est préemptée (elle perd la ressource unité centrale) et celle de plus haute priorité s'exécute. L'ordonnanceur garantit qu'une tâche qui a été préemptée reste en tête de liste, pour reprendre son exécution avant les autres.

Le fonctionnement d'un tel ordonnanceur est illustré sur la figure 2. Le système d'exploitation 11 comprend un interface du système POSIX/UNIX 12. Les tâches applicatives sont référencées 13. Une unité de gestion du temps 15, qui reçoit des interruptions IT du compteur matériel, remet à jour des compteurs logiciels (flèche 16). Elle envoie (flèche 19) à l'ordonnanceur 18 une demande de réordonnancement lors de l'expiration du quantum de temps de la tâche courante. L'ordonnanceur 18 affecte (flèche 20) la ressource unité centrale à la tâche la plus prioritaire prête à s'exécuter.

Une telle politique de partage pénalise naturellement les tâches les moins prioritaires, puisque le temps unité centrale utilisable par ces dernières dépend du temps laissé libre par les tâches de priorité supérieure.

Un article de l'art connu, référencé [2] en fin de description, considère le problème d'ordonnancement d'applications temps réel dans un système d'exploitation d'usage général. Ce système est modifié de façon à bénéficier d'un ordonnancement temps réel tout en préservant les logiciels existants. L'architecture considérée utilise un ordonnanceur de type POSIX. Un coefficient QOS (Quality Of Service) est défini par un couple de paramètres : temps unité centrale t, période de temps T. Un contrat correspondant à un tel coefficient définit qu'au moins une durée t doit être allouée à une tâche dans chaque période T. L'ordonnanceur est instruit des paramètres à utiliser pour chaque tâche.

L'invention a pour objectif de pallier les inconvénients définis ci-dessus, en proposant un procédé et un dispositif d'exploitation temps réel multitâches, notamment dans un calculateur de type ATSU.

### Exposé de l'invention

La présente invention concerne un procédé d'exploitation temps réel multitâches dans lequel on définit un ensemble de fenêtres d'observations de durée fixe paramétrable, caractérisé en ce qu'il comprend :
- une étape d'attribution d'une durée d'exécution maximale à chaque tâche dans chaque fenêtre de temps, au cours de laquelle un ordonnanceur garantit un temps minimal d'exécution aux tâches les moins prioritaires,
- une étape de calcul du temps consommé par chaque tâche au cours de chaque fenêtre d'observation,
- une étape de sanction au cours de laquelle les tâches qui dépassent leur quota, dans une fenêtre d'observation donnée, sont sanctionnées, et ne peuvent reprendre la ressource unité centrale qu'au cours de la fenêtre d'observation suivante.

Avantageusement au cours de l'étape de calcul on utilise la valeur fournie par un compteur logiciel global, que l'on affine en lui ajoutant le temps écoulé depuis la dernière impulsion horloge lu à la volée dans un compteur matériel, et une étape de déroutement : un premier point de déroutement existant dans le code de l'ordonnanceur, un second point de déroutement existant dans le programme d'interruption de traitement des impulsions horloge ; ce dernier, plus prioritaire que toutes les tâches du système, permettant de calculer le temps consommé par la tâche en cours, et de la sanctionner si son quota est dépassé.

L'étape de sanction a lieu lors d'un changement de tâche (la tâche sortante a-t-elle dépassé son quota ?) ou lors de la génération d'une impulsion horloge (la tâche courante a-t-elle dépassé son quota ?). L'étape de sanction peut consister en un abaissement de la priorité de la tâche, un arrêt de la tache, ou une destruction de la tâche.

Dans un mode de réalisation avantageux, le procédé de l'invention comprend :
* une étape de démarrage dans laquelle :
   - on installe des procédures de déroutement,
   - on lance une tâche de supervision,
   - on configure la durée de la fenêtre d'observation ;
* une étape de gestion de tâche dans laquelle :
   - lors de la création d'une tâche :
      - on configure la durée maximale d'utilisation de la ressource unité centrale dans la fenêtre d'observation et la sanction à appliquer en cas de dépassement,
      - on enclenche la surveillance de cette tâche,
   - lors de la terminaison de cette tâche :
      - on inhibe la surveillance de celle-ci,
   - lors de la commutation de cette tâche sortante à une autre tâche entrante :
      - on date l'évènement,
      - on enregistre le temps de début d'activation de la tâche entrante,
      - on calcule le temps consommé de la tâche sortante pendant la fenêtre d'observation,
      - on applique une sanction si le temps consommé par la tâche sortante est supérieur au temps maximum attribué ;
* une étape de gestion d'impulsion horloge ou "tic" dans laquelle :
   - on calcule le temps consommé par la tâche en cours,
   - on applique une sanction si ce temps consommé est supérieur au temps maximum attribué,
* une étape de gestion de fenêtre d'observation dans laquelle :
   - en début de fenêtre, on met à zéro le temps consommé pour les tâches,
   - en fin de fenêtre, on réhabilite les tâches sanctionnées.

L'invention concerne également un système d'exploitation temps réel multitâches, caractérisé en ce qu'il comprend un module de surveillance, qui contient le code d'une procédure de déroutement pour la mise en place de points de déroutement, un interface, par exemple standard UNIX, des fonctions accessibles par une tâche de supervision, une unité de gestion de temps, et un ordonnanceur.

Le système de l'invention permet, au-delà des contraintes de ségrégation temporelle, d'assurer une répartition plus juste de la ressource unité centrale et d'améliorer la robustesse du système, en contrôlant une potentielle utilisation exclusive de la ressource. Il peut avantageusement être utilisé dans un calculateur de type ATSU.

### Brève description des dessins

La figure 1 illustre une mesure de la durée d'exécution d'une tâche dans un système de l'art connu.

La figure 2 illustre le fonctionnement d'un ordonnanceur dans un système d'exploitation temps réel multitâches de l'art connu.

La figure 3 illustre le fonctionnement d'un ordonnanceur dans le système d'exploitation temps réel multitâches de l'invention.

### Exposé détaillé de modes de réalisation

Dans le procédé de l'invention, on définit un ensemble de fenêtres d'observation, de durée fixe, paramétrable. Dans chaque fenêtre on attribue une durée d'exécution maximale (un quota) à chaque tâche. Au cours d'une fenêtre donnée, les tâches qui dépassent leur quota sont sanctionnées, et ne peuvent reprendre la ressource de l'unité centrale qu'au cours de la fenêtre suivante. Par ailleurs, pour ne pas tomber dans le problème de mesure de l'art antérieur, tel que décrit précédemment, et garantir un contrôle fiable du partage de la ressource unité centrale, on réalise de plus un calcul précis du temps consommé par chaque tâche. Dans le procédé de l'invention, en effet, on ne comptabilise plus, comme décrit précédemment, les impulsions horloge correspondant aux tâches en cours d'exécution, mais les dates de début et de fin de leur activation. Pour dater ces évènements, on utilise la valeur fournie par le compteur logiciel global, que l'on affine en lui ajoutant le temps écoulé depuis la dernière impulsion horloge (résidu), lu à la volée dans le compteur matériel.

La datation des évènements lors d'un changement de tâche nécessite la mise en place d'un point de déroutement (procédure "Hook") dans le code existant de l'ordonnanceur. Une telle procédure "Hook" est un simple appel de routine bien connu de l'homme du métier. Cependant, ce seul point de déroutement ne permet pas de détecter une utilisation exclusive de l'unité centrale par une tâche de haute priorité, puisque précisément aucun changement de contexte de tâche ne peut s'opérer. On place donc un autre point de déroutement dans le programme d'interruption de traitement des impulsions horloge. Ce dernier, plus prioritaire que toutes les tâches du système, permet de calculer le temps consommé par la tâche en cours, et de la sanctionner si son quota est dépassé. Le temps de réaction de la sanction dépend de la durée de l'impulsion horloge. Ainsi, dans un système d'exploitation cadencé à 10 ms, une tâche qui consomme du temps de façon excessive est sanctionnée au plus 10 ms après avoir dépassé son quota.

Un module de surveillance s'intègre dans le système d'exploitation comme un pilote ou "driver". Il contient le code des procédures déroutement, et offre une interface standard UNIX des fonctions accessibles par la tâche de supervision (paramétrage de la surveillance, récupération d'informations sur la consommation des tâches, lecture de l'historique des dépassements).

Une sanction peut être prise à deux moments : sur un changement de tâche (la tâche sortante a-t-elle dépassé son quota ?) ou sur la génération d'une impulsion horloge (la tâche courante a-t-elle dépassé son quota ?). Une sanction fait l'objet d'une trace qui est conservée dans un historique consultable par la tâche de supervision. Elle peut prendre plusieurs formes abaissement de la priorité de la tâche, arrêt de la tâche, ou destruction.

La figure 3 illustre le fonctionnement d'un ordonnanceur dans le procédé d'exploitation temps réel multitâches de l'invention. Les éléments qui existaient déjà sur la figure 2 conservent les mêmes références. La tâche de supervision est référencée 30. L'unité de gestion de temps 15 permet à la fois (flèche 31) :
- la mise à jour des compteurs logiciels,
- la récupération du résidu de temps.

Le module de surveillance 32 permet (flèche 33) un paramétrage de la surveillance, et envoie (flèche 34) des informations sur l'état des tâches. Il permet également (flèche 35) :
- une datation des évènements,
- un contrôle de l'utilisation de la ressource unité centrale,
- une sanction.

Il reçoit (flèche 37) des interruptions IT du compteur logiciel pour le début de chaque fenêtre d'observation.

L'unité de gestion de temps 15 reçoit de ce module de surveillance 32 un message 38 de lecture du temps courant et lui envoie, via une procédure de déroutement 39 un message événement compteur 40. L'ordonnanceur 38 envoie au module de surveillance 32, via une procédure de déroutement 42, un message événement changement de tâche 43.

Le fonctionnement d'un tel système est résumé dans le tableau 1, situé en fin de description qui est un tableau des états du module de surveillance 32.

Deux caractéristiques du standard POSIX 1.d sont à comparer avec le procédé de l'invention :
- le serveur dit "sporadique"
- la surveillance et la mesure précise du temps d'exécution.

Dans ce standard, ce serveur sporadique consiste à garder constamment une réserve de temps unité centrale dans une période dite de remplissage, pour les tâches apériodiques du système. A la notion de réserve est associée une notion de priorité haute de traitement. Dès qu'une tâche apériodique est activée, elle passe en priorité haute et puise dans sa réserve de temps. Si sa réserve de temps est écoulée, elle repasse en priorité basse jusqu'à la prochaine période de remplissage. En augmentant la priorité des tâches moins prioritaires pendant un quota de temps donné, celles-ci sont sûres d'être prises en compte pendant un certain temps.

Par contre l'approche de l'ordonnanceur 18 selon l'invention est inverse. Pour garantir un temps d'exécution aux tâches moins prioritaires, celui-ci limite le temps d'exécution des tâches plus prioritaires.

Le standard POSIX.1b propose, de plus, des extensions temps réel pour la gestion du temps. Il offre la possibilité d'avoir accès à une horloge absolue d'une plus grande précision que celle donnée par le compteur logiciel global des impulsions horloge. Il permet de définir des alarmes logicielles par le biais de cette horloge. Le standard POSIX.1d propose, en outre, d'utiliser un concept d'horloge relative : le temps d'exécution de chaque tâche est tenu à jour avec une plus grande précision que celle donnée par le compteur logiciel local des impulsions horloge. De la même façon qu'avec l'horloge absolue, il est possible de programmer des alarmes associées à chaque horloge relative. L'expiration de l'alarme déclenche un signal vers la tâche concernée, qui peut décider elle même de se suspendre un certain temps avant de reprendre la ressource de l'unité centrale : le contrôle global du temps d'exécution est du ressort de chaque tâche, c'est un contrôle décentralisé.

La mesure du temps d'exécution de chaque tâche dans l'ordonnanceur 18 de l'invention reprend ce principe, mais la décision de sanctionner une tâche est prise au niveau de l'ordonnanceur de façon centralisée.

On va à présent décrire l'interface standard UNIX 12. Pour contrôler les paramètres de l'ordonnanceur 18 de l'invention et superviser les activités, dans un système d'exploitation de type UNIX, le code des pilotes ou "drivers" est accessible par l'utilisateur au travers d'un fichier spécial. L'ordonnanceur de l'invention est un pilote qui offre un interface utilisateur sous la forme de services génériques appliqués sur le fichier spécial et décrits dans la norme POSIX 1003.1. A un service générique correspond une mise en oeuvre spécifique propre au pilote. On distingue les opérations d'ouverture et de fermeture de fichier (avec contrôle des droits d'accès), l'opération de lecture de l'historique des dépassements, et enfin l'opération de contrôle/paramétrage de l'ordonnanceur de l'invention. Les procédures de déroutement sont des services internes au pilote, non directement accessible depuis un programme utilisateur.

Le fonctionnement d'un tel interface est illustré dans le tableau 2 situé en fin de description.

### Application du procédé de l'invention dans une configuration avionique.

Le procédé de l'invention peut être utilisé dans le contexte embarqué d'un calculateur ATSU ("Air Traffic Services Unit"), qui gère les liaisons entre certains équipements avion et les moyens de communications sol/bord. Les principales fonctions de ce calculateur sont réalisées par les applications suivantes :
- les applications de service de trafic aérien ou ATC (gestion du dialogue équipage/contrôleur CPDLC/AFN, surveillance ADS),
- les applications de communication opérationnelles compagnie ou applications AOC.

Lorsque le calculateur ATSU est livré, la compagnie client peut mettre en oeuvre des applications qui lui appartiennent, développées elles-mêmes ou fait développer par un tiers. Les contraintes associées à une telle exigence se traduisent par une structure d'accueil permettant de :
- rendre ces différents développements les plus autonomes possibles,
- garantir la non perturbation d'une application ATC par une application AOC,
- et garantir une capacité de traitement à chaque tâche.

Ainsi dans le procédé de l'invention, des quotas sont affectés aux différentes tâches, pour garantir un minimum de temps d'exécution aux applications AOC (moins prioritaires que les applications ATC). Dès que le quota est atteint pour une application, une trace est conservée dans l'historique des dépassements et une sanction est appliquée. Les quotas et les sanctions pour chaque application de l'ATSU sont répertoriées dans un fichier de configuration. Ce fichier est lu par le processus privilégié, chargé de lancer toutes les applications. Ce processus positionne alors les attributs d'ordonnancement pour chaque application et entre dans un mode de surveillance en attente d'éventuels dépassements de quotas.

### REFERENCES

[1] Document POSIX : Institute of Electrical and Electronics Engineers. Portable Operating System Interface - Part 1 : System Application Program Interface (API). 1-55937-061-0.
[2] "Soft Real Time Scheduling for General Purpose Client-Servor Systems" de David Ingram (//www.uk.research.att.com/∼dmi/linux-srt.)

**Tableau 1**

| EVENEMENT SYSTEME | ACTION DU MODULE DE SURVEILLANCE 32 |
|---|---|
| Démarrage du système | - installer les procédures de déroutement |
| | - lancer la tâche de supervision |
| | - configurer la durée de la fenêtre d'observation (fait par la tâche de supervision 30) |
| Création d'une tâche | - configurer la durée maximale d'utilisation de la ressource unité centrale dans une fenêtre d'observation, et la sanction à appliquer en cas de dépassement (fait par la tâche de supervision 30) |
| | - enclencher la surveillance de la tâche |
| Terminaison d'une tâche | - inhiber la surveillance de la tâche |
| Commutation de tâche | - dater l'événement (à partir des compteurs logiciels d'impulsions d'horloge et du résidu du compteur matériel) |
| | - enregistrer le temps de début de l'activation de la tâche entrante |
| | - calculer le temps consommé de la tâche sortante pendant la fenêtre d'observation (cumul des temps d'activation) |
| | - appliquer une sanction si le temps consommé est supérieur au temps maximum attribué (quota) |
| Impulsion horloge ("tic") matériel | - calculer le temps consommé pour la tâche en cours |
| | - appliquer une sanction si le temps consommé est supérieur au temps maximum attribué (quota) |
| Début de la fenêtre d'observation | - mettre à zéro le temps consommé pour les tâches du système |
| Fin de la fenêtre d'observation | - réhabiliter les tâches sanctionnées |

**Tableau 2**

| **Interface système UNIX/POSIX** | **Paramètres** | **Ponction réalisée dans le driver** |
|---|---|---|
| Int open(char*filename, int mode) | .filename=/devfssO | Contrôler que l'application qui ouvre le fichier a bien les privilèges super-utilisateur |
| | .mode=O_RDWR (lecture, écriture) retourne un descripteur de fichier | |
| Int close(int fd) | .fd=descripteur de fichier | Contrôler que l'application qui ferme le fichier a bien les privilèges super-utilisateur |
| Int read(int fd, char*buf, int size) | .fd= descripteur de fichier | Consulter l'historique des dépassements de quota |
| | .buf=zone mémoire dans laquelle sera. remontée le ou les éléments de l'historique | |
| | .size=taille buf | |
| Int write(intfd, char*buf, int size | Non mis en oeuvre | Non mis en oeuvre |
| Int ioctl(int fd, int cmd, char*arg) | .fd= descripteur de fichier | Lancer le compteur logiciel périodique qui définit la durée de la fenêtre d'observation |
| | .cmd=START_WINDOW | |
| | .arg non utilisé | |
| | .fd=descripteur de fichier | Arrêter le compteur périodique |
| | .cmd=STOP_WINDOW | |
| | .arg non utilisé | |
| Int ioctl(int fd, int cmd, char*arg) | .fd=descripteur de fichier | Configurer la durée d'une fenêtre d'observation |
| | .cmd=SET_WINDOW_DELAY | |
| | .arg=valeur en millisecondes de la durée de la fenêtre d'observation | |
| | .fd=descripteur de fichier | Récupérer les attributs d'ordonnancement pour une activité (quota et sanction) |
| | .cmd=GET_SCHED_VAL | |
| | .arg=attributs d'ordonnancement (quota et sanction positionné pour un processus) | |
| | .fd=descripteur de fichier | Positionner les attributs d'ordonnancement pour une activité (quota et type de sanction) |
| | .cmd=GET_SCHED_VAL | |
| | .arg=attributs d'ordonnancement | |
| | .fd=descripteur de fichier | Récupérer les valeurs courantes utilisées par le driver pour comptabiliser le |
| | .cmd=GET_SCHED_VAL | temps d'une tâche |
| | .arg=valeurs de mesure du temps consommé par une tâche dans la fenêtre d'observation | |

## Revendications

1. Procédé d'exploitation temps réel multitâches dans lequel on définit un ensemble de fenêtres d'observation, de durée fixe paramétrable, **caractérisé en ce qu'**il comprend :
- une étape d'attribution d'une durée d'exécution maximale à chaque tâche dans chaque fenêtre d'observation, au cours de laquelle un ordonnanceur garantit un temps minimal d'exécution aux tâches les moins prioritaires,
- une étape de calcul du temps consommé par chaque tâche au cours de chaque fenêtre d'observation,
- une étape de sanction au cours de laquelle les tâches qui dépassent leur quota, dans une fenêtre d'observation donnée, sont sanctionnées, et ne peuvent reprendre la ressource unité centrale qu'au cours de la fenêtre d'observation suivante.

2. Procédé selon la revendication 1, dans lequel au cours de l'étape de calcul, on utilise la valeur fournie par un compteur logiciel global, que l'on affine en lui ajoutant le temps écoulé depuis la dernière impulsion horloge, lu à la volée dans un compteur matériel.

3. Procédé selon la revendication 1, comprenant une étape de déroutement : un premier point de déroutement, existant dans le code de l'ordonnanceur, un second point de déroutement existant dans le programme d'interruption de traitement des impulsions horloge ; ce dernier, plus prioritaire que toutes les tâches du système, permettant de calculer le temps consommé par la tâche en cours, et de la sanctionner si son quota est dépassé.

4. Procédé selon la revendication 1, dans lequel l'étape de sanction a lieu lors d'un changement de tâche.

5. Procédé selon la revendication 1, dans lequel l'étape de sanction a lieu lors de la génération d'une impulsion d'horloge.

6. Procédé selon la revendication 1, dans lequel l'étape de sanction consiste en un abaissement de la priorité de la tâche, un arrêt de la tâche, ou une destruction de la tâche.

7. Procédé selon la revendication 1, comprenant une étape de démarrage dans laquelle :
- on installe des procédures de déroutement,
- on lance une tâche de supervision,
- on configure la durée de la fenêtre d'observation.

8. Procédé selon la revendication 7, comprenant une étape de gestion de tâche dans laquelle :
- lors de la création d'une tâche :
• on configure la durée maximale d'utilisation de la ressource unité centrale dans la fenêtre d'observation et la sanction à appliquer en cas de dépassement,
• on enclenche la surveillance de cette tâche,
- lors de la terminaison de cette tâche :
• on inhibe la surveillance de celle-ci,
- lors de la commutation de cette tâche sortante à une autre tâche entrante :
• on date l'évènement,
• on enregistre le temps de début d'activation de la tâche entrante,
• on calcule le temps consommé de la tâche sortante pendant la fenêtre d'observation,
• on applique une sanction si le temps consommé par la tâche sortante est supérieur au temps maximum attribué.

9. Procédé selon la revendication 7, comprenant une étape de gestion d'impulsion horloge dans laquelle :
- on calcule le temps consommé par la tâche en cours,
- on applique une sanction si le temps consommé est supérieur au temps maximum attribué.

10. Procédé selon la revendication 7, comprenant une étape de gestion de fenêtre d'observation dans laquelle :
- en début de fenêtre, on met à zéro le temps consommé pour les tâches,
- en fin de fenêtre, on réhabilite les tâches sanctionnées.

11. Système d'exploitation temps réel multitâches, **caractérisé en ce qu'**il comprend un module de surveillance (32), qui contient le code d'une procédure de déroutement pour la mise en place de points de déroutement, un interface des fonctions accessibles par une tâche de supervision (30), une unité de gestion de temps (15), et un ordonnanceur (38).

12. Utilisation du procédé selon l'une quelconque des revendications 1 à 10, dans un calculateur ATSU.
